# EUROPÄISCHE PATENTSCHRIFT

(11) **EP 3 803 360 B1**
(45) Veröffentlichungstag und Bekanntmachung des Hinweises auf die Patenterteilung: **20.07.2022**
(21) Anmeldenummer: 19731615.1
(22) Anmeldetag: 05.06.2019
(51) Int. Cl.: G01N 27/28, G08C 17/04, H01F 38/14

(54) **ÜBERWACHUNGSVORRICHTUNG FÜR EIN MESSSYSTEM VON PROZESSGRÖSSEN INSBESONDERE DER FLÜSSIGKEITSANALYSE**
MONITORING DEVICE FOR A SYSTEM FOR MEASURING PROCESS VARIABLES, IN PARTICULAR IN LIQUID ANALYSIS
DISPOSITIF DE SURVEILLANCE POUR UN SYSTÈME DE MESURE DE GRANDEURS DE PROCESSUS, EN PARTICULIER D'ANALYSE DE LIQUIDES

(30) Priorität: 06.06.2018 DE 102018208944
(43) Veröffentlichungstag der Anmeldung: 14.04.2021
(73) Patentinhaber: Knick Elektronische Messgeräte GmbH & Co. KG, 14163 Berlin (DE)
(72) Erfinder: MIESCH, Sebastian, 13503 Berlin (DE); GÖDEL, Thilo, 15806 Zossen (DE)
(74) Vertreter: Hübner, Gerd
(86) Internationale Anmeldenummer: PCT/EP2019/064651
(87) Internationale Veröffentlichungsnummer: WO 2019/234100

(56) Entgegenhaltungen:
- EP-A2- 2 233 994
- DE-A1-102009 028 794
- DE-A1-102013 107 964

## Beschreibung

Die vorliegende Patentanmeldung nimmt die Priorität der deutschen Patentanmeldung DE 10 2018 208 944.2 in Anspruch, deren Inhalt durch Bezugnahme hierin aufgenommen wird.

Die Erfindung betrifft eine Überwachungsvorrichtung für ein Messsystem von Prozessgrößen insbesondere der Flüssigkeitsanalyse sowie ein Messsystem mit einer solchen Überwachungsvorrichtung.

Derartige Messsysteme weisen als Grundkomponenten einen Sensor zur Erfassung einer Prozessgröße sowie eine kontaktlose, induktive Steckverbindung zwischen diesem Sensor und einem Kabel zur vorzugsweise bidirektionalen Übertragung digitaler Signale zwischen dem Sensor und einem entfernten Messumformer auf. Als Beispiel für ein solches Messsystem nach dem Stand der Technik ist auf die sogenannten Memosens-Sensoren zu verweisen, wie sie aus dem Memosens-Flyer, herunterladbar vom Internet unter der URL
www.memosens.orq/fileadmin/user upload/pdf/Memosens Flyer de.pdf bekannt sind. Bei diesem Messsystem werden Sensoren beispielsweise für die Messung von Parametern zur Flüssigkeitsanalyse, wie beispielsweise pH-Wert, Redox, Leitfähigkeit und Sauerstoffgehalt, eingesetzt, die die entsprechenden Messsignale digitalisieren und über eine Steckverbindung zwischen Sensor und einem Kabel induktiv, also kontaktlos, zu einem entfernten Messumformer übertragen. Diese induktive Verbindung versorgt den Sensor mit Energie und ermöglicht eine galvanisch getrennte, bidirektionale Signalübertragung zwischen Sensor und Kabel-Kupplung. Im Sensor ist ein Datenspeicher integriert, der dessen kompletten Lebenszyklus mit relevanten Daten, wie Gesamtbetriebsstunden, Betriebsstunden bei extremen Prozessbedingungen, Kalibrierhistorie usw. dokumentiert.

Zum Hintergrund der Erfindung ist darauf hinzuweisen, dass es Anwendungen in der chemischen oder pharmazeutischen Industrie gibt, bei denen dank solcher digitaler Sensoren auf eine Vor-Ort-Anzeige verzichtet werden kann. Messwerte werden digital direkt an den Messumformer in einem Leitsystem weitergeleitet, wo dann die Messwerte entsprechend angezeigt und/oder weiterverarbeitet werden.

Der Nachteil einer solchen Struktur des Messsystems ist, dass vor Ort an der Messstelle, wo der Sensor in den zu überwachenden Prozess eingreift, kein Zugriff auf Messwerte und Sensordaten verfügbar ist. Dies ist insbesondere bei der Inbetriebnahme einer Prozessanlage oder bei Wartungsarbeiten hinderlich. Um auf Sensordaten zugreifen zu können, muss das Kabel vom Sensor entfernt und ein Handheld-Gerät angeschlossen werden. Man kann also einerseits vor Ort nicht "online" messen, andererseits muss bei Durchführung einer solchen Messung vor Ort der Datenfluss zwischen Sensor und Messumformer unterbrochen werden.

Weitere Messsysteme sind beispielsweise aus DE102009028794 A1, DE102013107964 A1, oder EP2233994 A2 bekannt. Hier sind die Überwachungsvorrichtungen bereits in die Steckverbindungen selbst eingebaut, welche den Sensor mit dem Messumformer verbinden. Der Nachteil dieser Systeme ist ein komplexerer Aufbau der Steckverbindungen.

Zur Lösung dieser Problematik schlägt die Erfindung nun eine gesonderte Überwachungsvorrichtung gemäß dem Kennzeichnungsteil des Patentanspruches 1 vor, die gekennzeichnet ist durch
- eine auf die Steckverbindung aufsetzbare, kontaktlos arbeitende Koppeleinrichtung zur Erfassung der über die Steckverbindung übertragenen Signale,
- eine Auswerteeinrichtung zur Auswertung der erfassten Signale, und
- eine Anzeigeeinrichtung zur Darstellung der ausgewerteten Signale.

Aufgrund dieser erfindungsgemäßen Überwachungsvorrichtung ist nun zumindest ein Erfassen und Anzeigen der über die Steckverbindung des Messsystems übertragenen Daten vor Ort an der Position des Sensors im Prozess möglich, ohne in die Steckverbindung und damit die Kommunikation zwischen Sensor und Messumformer eingreifen zu müssen. Dies stellt bei Inbetriebnahme- und Wartungsarbeiten am Messsystem eine erhebliche Erleichterung dar.

Da im Rahmen der Memosens-Technologie bei vielen Sensoren nur sogenannte Rohwerte, also etwa eine für den eigentlichen Messwert repräsentative Spannung im Millivolt-Bereich, übertragen werden, die dann mit den Kalibrierdaten des Sensors im Messumformer ausgewertet und in den eigentlichen Messwert, wie beispielsweise den pH-Wert transformiert werden, weist die erfindungsgemäße Überwachungsvorrichtung selbst eine Auswerteeinrichtung auf, die diese Aufgabe erfüllt und entsprechend den interessierenden Messwert in ihrer Anzeigeeinrichtung darstellt.

Bevorzugte Weiterbildungen der erfindungsgemäßen Überwachungsvorrichtung sind in den abhängigen Ansprüchen angegeben. So weist die Koppeleinrichtung für die kontaktlose Erfassung der über die Steckverbindung übertragenen Signale mindestens eine Empfangsspule auf, die dann durch Aufsetzen der Koppeleinrichtung auf die Steckverbindung die darüber induktiv übertragenen Signale empfangen und zur Auswerteeinrichtung weiterleiten kann.

Letztere ist zusammen mit der Anzeigeeinrichtung vorzugsweise in einem Handgerät angeordnet, das mit der Koppeleinrichtung über eine Kabelverbindung verbunden ist. Damit lässt sich vor Ort die Überwachungseinrichtung besonders ergonomisch handhaben, ablesen und betätigen. Eine Ausführung, bei der die Koppel-, Auswerte- und Anzeigeeinrichtung in einer Geräteeinheit als Überwachungsvorrichtung auf die Steckverbindung aufsetzbar ist, ist ebenfalls als bevorzugte Ausführungsform denkbar.

Als Alternative zu einer Kabelverbindung zwischen Koppeleinrichtung und Handgerät ist auch eine drahtlose Verbindung beispielsweise nach einem üblichen Industrie-Funkstandard einsetzbar.

Bevorzugtermaßen lassen sich also alle vom Sensor dedektierten Messwerte von Prozessgrößen oder Sensordaten, insbesondere Kalibrier- und/oder Belastungsdaten des Sensors von der Überwachungsvorrichtung erfassen, auswerten und über die Anzeigeeinrichtung vor Ort unabhängig von einer Leitwarte beim Prozess ausgeben. Mit der Überwachungsvorrichtung kann also eine Art "Beobachtungsfunktion" wahrgenommen werden.

Da über das Beobachten von übertragenen Daten hinaus für eine Optimierung der Überwachungsvorrichtung auch eine Einflussnahme auf den Sensor vor Ort wünschenswert sein kann, ist gemäß einer weiteren bevorzugten Ausführungsform vorgesehen, dass die Koppeleinrichtung eine Sendespule zur Einkopplung digitaler Signale in die Steckverbindung für die Kommunikation der Überwachungsvorrichtung mit dem Sensor und gegebenenfalls auch mit dem Messumformer aufweist.

Grundsätzlich wäre es natürlich möglich, diese "Sendefunktion" auch ohne die vorher erörterte "Beobachtungsfunktion" zu realisieren.

Vorzugsweise sind mittels der Überwachungsvorrichtung von deren Steuereinrichtung generierte Daten für den Sensor und/oder den Messumformer über die Koppeleinrichtung in die Kommunikation zwischen Sensor und Messumformer einkoppelbar. Damit ist es beispielsweise möglich, in den Sensorspeicher geänderte Kalibrierdaten einzulesen und anschließend dem Messumformer zu signalisieren, diese geänderten Sensordaten erneut abzufragen.

Diese von der Steuereinrichtung der Überwachungsvorrichtung generierten Daten können verschiedene Datenarten umfassen, wie
A Manipulationsdaten zur Beeinflussung der zwischen Sensor und Messumformer übertragenen Messdaten,
B Befehlsdaten zur Signalisierung von Aufgabenanforderungen an Sensor und/oder Messumformer, insbesondere zum Neuauslesen von Sensordaten, wie Kalibrierdaten, und/oder
C Sensordaten, insbesondere Kalibrierdaten oder andere Parameterdaten, die neu in den Sensor einzuschreiben sind.

Im Zusammenhang mit der Variante B ist zu erläutern, dass üblicherweise vom Sensor zum Messumformer nur Rohdaten in Form einer Spannung übermittelt werden, zu deren Auswertung und Bestimmung der davon repräsentierten Messgröße, wie einem pH-Wert, die Kenntnis der entsprechenden Kalibrierdaten des Sensors seitens der Überwachungsvorrichtung notwendig ist. Zu diesem Zweck kann letztere einen Befehl in die Kommunikationsverbindung an den Sensor einspeisen, damit dieser seine Kalibrierdaten erneut sendet. Mit dieser Information und den nachfolgend übermittelten Rohdaten kann dann die Überwachungsvorrichtung vor Ort die gewünschte Messgröße ermitteln und zur Anzeige bringen.

Sofern ein weiterentwickelter Sensor in der Lage ist, digitale Daten zum Messumformer zu senden, die einen entsprechenden Messwert direkt repräsentieren, kann die Überwachungsvorrichtung dann diese Daten direkt abgreifen und ohne Abfragen der Kalibrierdaten des Sensors die entsprechende Messgröße daraus direkt zur Anzeige bringen.

Zur weiteren Variabilisierung der Einsatzmöglichkeiten der erfindungsgemäßen Überwachungsvorrichtung kann diese mit einer Eingabeeinrichtung zur Eingabe von Steuerbefehlen und/oder der vorstehend umrissenen Daten versehen sein.

In Fortbildung der Koppeleinrichtung kann statt getrennter Empfangs- und Sendespulen eine gemeinsame, bifunktionale Spule vorgesehen sein. Diese ist vorzugsweise als Rahmenspule auf einem geschlitzten Trägerrohr ausgebildet, wobei eine oder mehrere Wicklungen in Kantennähe parallel der Schlitzkanten und der diese verbindenden Rohr-Stirnkanten verlaufen. Durch diese Konfiguration kann die Koppeleinrichtung die Steckverbindung zwischen Sensor und Kabel deutlich aus der Mitte der Längsachse der Koppeleinrichtung heraus versetzt umfassen, wodurch eine Verschlechterung der Kopplung aufgrund gegensätzlicher Feldrichtungen vermieden wird. Diese Anordnung hat dann den weiteren Vorteil, dass die Steckverbindung nicht vollständig von der Koppeleinrichtung umfasst werden muss, sondern eine teilweise Überdeckung bereits ausreicht, um die vom Sensor und/oder Messumformer über die Steckverbindung übertragene Trägerfrequenz mit den aufmodulierten Daten zu empfangen.

Für die Gewährleistung einer zuverlässigen Funktion des eigentlichen Messsystems unabhängig von einem Eingriff in die Kommunikation zwischen Sensor und Messumformer seitens der erfindungsgemäßen Überwachungsvorrichtung findet die jeweils mittels der Koppeleinrichtung erfolgende Erfassung der über die Steckverbindung übertragenen digitalen Signale und die Einkopplung von Daten in die Steckverbindung vorzugsweise ohne störenden Einfluss auf das Messsystem und die Stabilität der Kommunikationsverbindung zwischen Sensor und Messumformer statt.

Bezüglich der Energieversorgung der Überwachungsvorrichtung sind ebenfalls unterschiedliche Varianten denkbar. So kann die Koppeleinrichtung eine integrierte Energieversorgung beispielsweise in Form einer Batterie aufweisen. Alternativ oder in Kombination damit kann diese auch eine kontaktlose arbeitende, induktive Energieversorgungseinrichtung aufweisen, bei der mit einer entsprechenden Spulenanordnung aus der Steckverbindung zwischen Sensor und Kabeln elektrische Energie induktiv abgegriffen wird.

Gemäß einer weiteren bevorzugten Ausführungsform können die von der Auswerteeinrichtung ausgewerteten Signale, wie sie von der Koppeleinrichtung aus der Steckverbindung abgegriffen werden, in einer Aufzeichnungseinrichtung zur späteren Verarbeitung in geeigneter Weise gespeichert werden.

Die Erfindung bezieht sich gemäß Anspruch 15 ferner auf die Kombination einerseits eines Messsystems zur Erfassung von Prozessgrößen insbesondere der Flüssigkeitsanalyse, welches Messsystem einen Sensor zur Erfassung einer Prozessgröße sowie eine kontaktlose, induktive Steckverbindung zwischen Sensor und einem Kabel zur vorzugsweise bidirektionalen Übertragung digitaler Signale zwischen dem Sensor und einem entfernten Messumformer umfasst, und andererseits einer mit der Steckverbindung koppelbaren Überwachungsvorrichtung gemäß den vorstehenden Ansprüchen.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine schematische Darstellung eines Messsystems mit Überwachungsvorrichtung,
- Fig. 2: eine vergrößerte, ausschnittsweise und detailliertere Schemadarstellung des Messsystems mit Überwachungsvorrichtung gemäß Figur 1,
- Fig. 3: ein zeitliches Signaldiagramm der Datenübertragung zwischen Sensor und Messumformer gemäß dem RS485-Standard,
- Fig. 4A und 4B: zeitliche Signaldiagramme der Datenübertragung gemäß Fig. 3 ohne und mit Dateneinkopplung seitens der Überwachungsvorrichtung, sowie
- Fig. 5: eine höchst schematische Darstellung einer bifunktionalen Rahmenspule der Überwachungsvorrichtung.

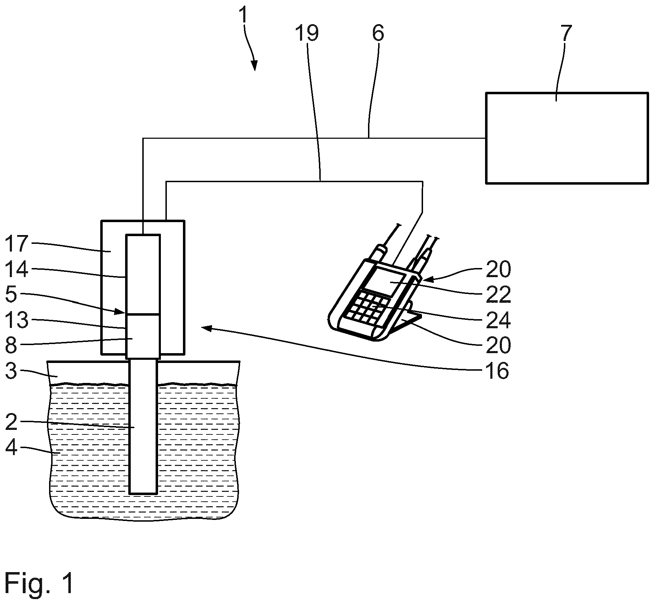

Wie insbesondere aus Fig. 1 deutlich wird, weist ein als Ganzes mit 1 bezeichnetes Messsystem einen Sensor 2 beispielsweise zur Messung des pH-Wertes der in einem Prozessbehälter 3 befindlichen Prozessflüssigkeit 4 auf. Der Sensor 2 ist über eine kontaktlose, induktive Steckverbindung 5 mit einem Kabel 6 verbunden, das zu einem entfernten, beispielsweise in einer Leitwarte angeordneten Messumformer 7 führt. Das Messsystem 1 arbeitet nach dem Quasi-Industrie-Standard "Memosens", wie dies in dem eingangs erwähnten Memosens-Flyer umrissen ist. Dies bedeutet - kurz zusammengefasst - dass das eigentliche Messsignal des Sensors 2 in einem "intelligenten" Sensorkopf 8 mit Mikroprozessor-Steuerung 9 und Datenspeicher 10 so aufbereitet wird, dass es als getakteten, digitales Signal auf eine Trägerfrequenz beispielsweise in der Größenordnung von einigen wenigen hundert kHz aufmoduliert kontaktlos induktiv, also galvanisch getrennt, über die Steckverbindung 5 und das Kabel 6 nach dem RS485-Standard zum Messumformer 7 übertragen wird. Dazu ist in der Steckverbindung 5 jeweils eine Übertragungsspule 11, 12 dem sensorseitigen Stecker 13 und der kabelseitigen Steckbuchse 14 der Steckverbindung 15 zugeordnet. Das Übertragungssignal wird von einem Mikrocontroller 15 in der kabelseitigen Steckbuchse 14 aufgenommen und per RS485-Standard an den Messumformer 7 weitergeleitet. Dort werden die Signale wie üblich einer entsprechenden Auswertung und Weiterverarbeitung unterzogen.

In umgekehrter Richtung werden auch vom Messumformer 7 erzeugte Steuer-, Parameter- und Befehlsdaten nach dem gleichen Standard über die Steckverbindung 5 an den Sensor 2 gesendet und dort entsprechend dem Memosens-Standard weiterverarbeitet.

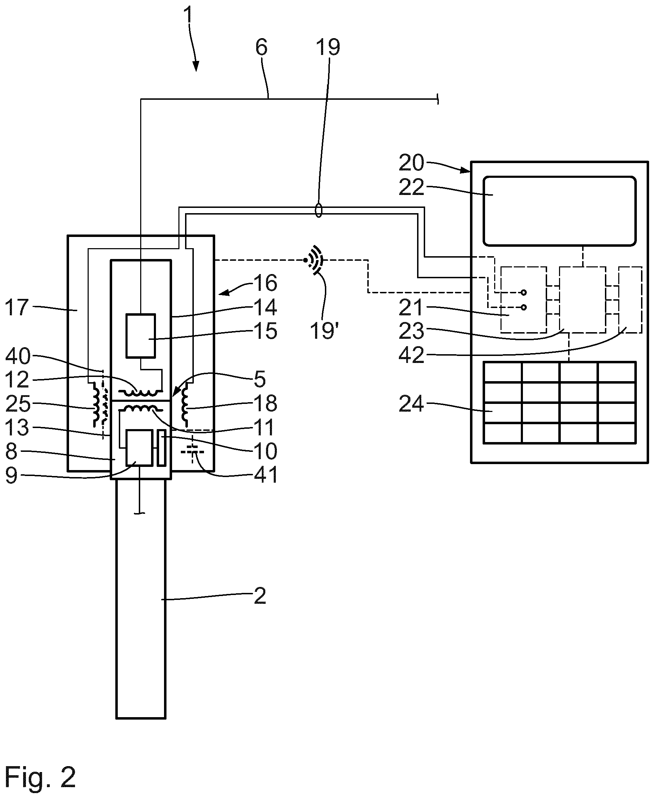

Um nun vor Ort beim Prozessbehälter 3 Zugriff auf die vom Sensor 2 bzw. Messumformer 7 gesendeten und über die Steckverbindung 5 übertragenen Daten zu haben und an dieser Stelle selbst gegebenenfalls Steuer-, Parameter- und Befehlsdaten in das Messsystem einzuschleifen, ist die in Fig. 1 und 2 dargestellte Überwachungsvorrichtung 16 vorgesehen. Diese weist eine auf die Steckverbindung 5 aufsetzbare, kontaktlos arbeitende Koppeleinrichtung 17 auf, die beispielsweise als eine Art Ringmanschette um die Steckverbindung 5 herum anlegbar ist. Zur Erfassung der induktiv zwischen den beiden Übertragungsspulen 11, 12 der Steckverbindung 5 in beiden Richtungen übertragenen Signale ist in der Koppeleinrichtung 17 wiederum eine Empfangsspule 18 - diese kann auch durch mehrere Spulen gebildet seine - angeordnet. Damit kann die vom Memosens-System erzeugte Trägerfrequenz mit den aufmodulierten Daten empfangen und in der Überwachungsvorrichtung 16 verarbeitet werden.

Dazu werden diese empfangenen Signale über eine Kabelverbindung 19 zu einem Handgerät 20 - beispielsweise einem Multiparameter-Portable für pH-, Leitfähigkeits- und Sauerstoff-Memosens-Sensoren "Portavo 907 Multi" der Knick Elektronische Messgeräte GmbH & Co. KG, 14163 Berlin, siehe www.knick-international.com/de/products/portables/portavo/portavo-907-multi/index.html gesendet, wo eine Auswerteeinrichtung 21 in Form eines Mikroprozessors die übermittelten Signale weiterverarbeitet und auf einer Anzeigeeinrichtung 22 für einen Beobachter erkennbar darstellt. Insoweit können also vom Sensor 2 erfasste Messwerte von Prozessgrößen, Sensordaten, insbesondere Kalibrier- und/oder Belastungsdaten des Sensors 2 von der Überwachungsvorrichtung 16 erfasst, ausgewertet und über diese Anzeigeeinrichtung 22 ausgegeben werden.

Statt der oder zusätzlich zur Kabelverbindung 19 kann zwischen der Koppeleinrichtung 17 und dem Handgerät 20 auch eine drahtlose Funkverbindung 19' mit entsprechenden Komponenten in den beiden Gerätschaften zur Datenübermittlung eingesetzt werden.

Grundsätzlich wird die Überwachungsvorrichtung 16 durch eine Steuereinrichtung 23 auf der Basis eines üblichen Mikrocontrollers betrieben, der im gezeigten Beispiel durch die Steuereinrichtung des handelsüblichen Handgeräts 20 gebildet ist.

Das Handgerät 20 weist ferner eine Eingabeeinrichtung 24 beispielsweise in Form einer Folientastatur auf, mit deren Hilfe das Absetzen von Steuerbefehlen und/oder Daten in die Kommunikation zwischen Sensor 2 und Messumformer 7 iniziiert werden kann. Dazu sind in der Koppeleinrichtung 17 eine oder mehrere Sendespulen 25 vorgesehen, die von der Steuereinrichtung 23 aufgrund entsprechender Eingaben über die Eingabeeinrichtung 24 erzeugte Signale in Form einer Trägerfrequenz mit aufmodulierten Daten induktiv auf die Übertragungspulen 11, 12 in der Steckverbindung 5 übertragen, von wo sie entsprechend der üblichen Memosens-Kommunikation zwischen Sensor 2 und Messumformer 7 weitergegeben und verarbeitet werden können.

Bezüglich der in die Koppeleinrichtung 17 integrierten Energieversorgung sind in Figur 2 verschiedene Alternativen gestrichelt dargestellt. So kann beispielsweise eine induktive Energieversorgungseinrichtung 40 kontaktlos aus den über die Steckverbindung 5 zwischen den Übertragungsspulen 11, 12 übertragenen Signale elektrische Energie auskoppeln. Auch eine Batterieversorgung 41 kann alternativ oder zusätzlich vorgesehen sein. Letztere kann auch im Handgerät 20 untergebracht sein.

Schließlich kann in der Überwachungsvorrichtung 16, beispielsweise - wie in Fig. 2 wiederum gestrichelt angedeutet ist - im Handgerät 20, eine Aufzeichnungseinrichtung 42 vorgesehen sein, in der von der Koppeleinrichtung 17 aus der Steckverbindung 5 abgegriffene Signale durch entsprechende Speicherung aufgezeichnet und zur späteren Verarbeitung zu Verfügung gestellt werden.

Wie oben bereits angesprochen, können mit Hilfe der Überwachungsvorrichtung 16 beispielsweise Manipulationsdaten zur Beeinflussung der zwischen Sensor 2 und Messumformer 7 übertragenen Messdaten, Befehlsdaten zur Signalisierung von Aufgabenanforderungen an Sensor 2 und/oder Messumformer 7, insbesondere zum Neuauslesen von Sensordaten und/oder Sensordaten selbst, insbesondere Kalibrierdaten oder andere Parameterdaten, die neu in den Sensor einzuschreiben sind, in das System übertragen werden.

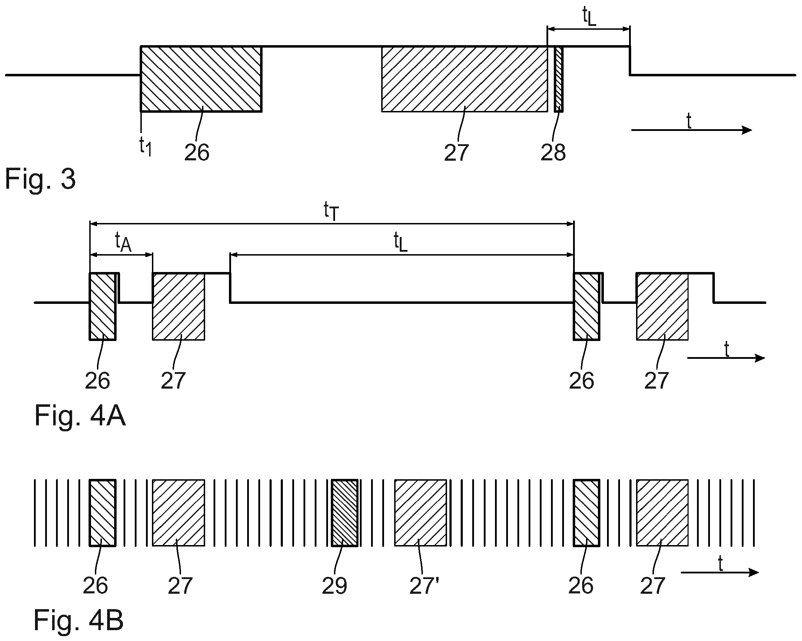

Um solche Daten praktisch von außen auf das Messsystem 1 aufzumodulieren, werden taktsynchron zur Trägerfrequenz entsprechende Pulse eingekoppelt, die das ursprüngliche Signal manipulieren. Zur näheren Erläuterung soll in diesem Zusammenhang kurz auf die Datenkommunikation nach dem RS485-Standard anhand der Fig. 3, 4A und 4B eingegangen werden.

In Fig. 3 gezeigt ist, sendet zu einem bestimmten Zeitpunkt t₁ der Messumformer 7 eine Request-Telegramm 26 an den Sensor 2. Dieser antwortet mit einem Response-Telegramm 27. Wie aus dem in Fig. 3 als dünnes "Rechtecksignal" eingezeichneten Zeitraster hervorgeht, bleibt nach dem Response-Telegramm 27 noch eine Zeitlücke t_{L}, bis die Übertragungsstrecke durch Richtungsumschaltung auf "Empfang" gesetzt wird. Diese Zeitlücke t_{L} wird genutzt, um durch die Überwachungsvorrichtung 16 einen Signalisierungscode 28 einzukoppeln.

Dieser kann beispielsweise einen Befehl an den Sensor 2 beinhalten, dass dieser seine Kalibrierdaten an den Messumformer 7 aussendet. Diese Kalibrierdaten können dann von der Überwachungsvorrichtung 16 erfasst und in ihrer Auswerteeinrichtung 21 gespeichert werden. Der Sensor 2 sendet danach im Normalbetrieb wieder die die Messgröße repräsentierenden Rohdaten im Response-Telegramm 27 aus, die von der Überwachungsvorrichtung 16 abgegriffen werden. Daraus wird die eigentliche Messgröße mithilfe der in der Auswerteeinrichtung 21 gespeicherten Kalibrierdaten bestimmt und zur Anzeige gebracht.

Wie aus den Fig. 4A und 4B hervorgeht, kommuniziert der Messumformer 7 zur Abfrage von Messwerten zyklisch mit dem Sensor 2, indem er getaktet - siehe Taktzeit t_{T} - jeweils ein Request-Telegramm 26 sendet, wonach in einem festen Zeitraster - siehe Antwortzeit t_{A} - der Sensor 2 mit einem Response-Telegramm 27 antwortet.

Gemäß Fig. 4B kann den Zeitlücke t_{L} zwischen den Telegrammen 27, 26 von der Überwachungsvorrichtung 16 genutzt werden, um selbst ein Daten-Telegramm 29 an den Sensor 2 zu senden, um beispielsweise korrigierte Kalibrierdaten darin einzuschreiben. Der Sensor 2 antwortet darauf wiederum mit einem Response-Telegramme 27'. Die Überwachungsvorrichtung 16 muss nach dem Ändern der Kalibrierdaten dies dem Messumformer 7 mit einem entsprechenden Daten-Telegramm (nicht dargestellt) signalisieren, damit diese geänderten Kalibrierdaten neu ausgelesen werden.

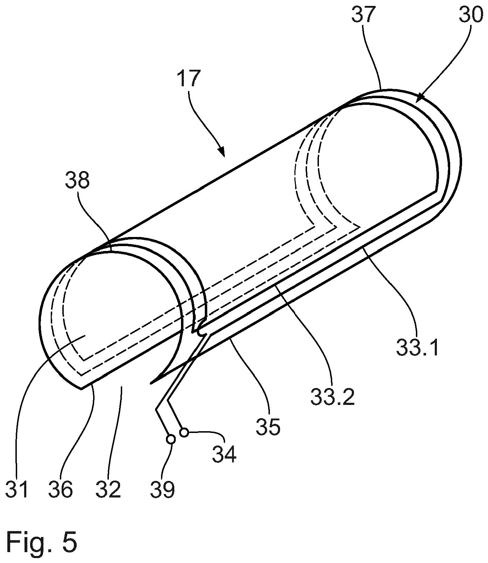

Anhand von Fig. 5 ist schließlich eine spezielle Ausführungsform der in der Überwachungsvorrichtung 16 eingesetzten Koppeleinrichtung 17 sehr schematisiert dargestellt. Es handelt sich dabei um eine bifunktionale Spule 30 mit einem geschlitzten Trägerrohr 31, dass mit einen parallel zur Rohrlängsachse verlaufenden Schlitz 32 versehen ist. Die Leiter in Form von Drähten oder Leiterbahnen, die die beiden Wicklungen 33.1, 33.2 bilden, verlaufen in oder auf dem Träger 31 zur Bildung der ersten Wicklung 33.1 ausgehend von einem Eingangsanschluss 34 im Kantennähe parallel zur Schlitzkante 35 dann über die eine, diese Schlitzkante 35 mit der zweiten Schlitzkante 36 verbindende Rohr-Stirnkante 37, weiter parallel zur hinteren Schlitzkante 36 bis zur zweiten Rohr- Stirnkante 38 und von dort wieder parallel zu dieser Rohr-Stirnkante 38 in Richtung zum Eingangsanschluss 34. Dort wiederholt sich der Umlauf für die zweite Wicklung 33.2, wonach die Leiterbahn in einem Ausgangsanschluss 39 endet.

Die parallel zu den Rohr-Stirnkanten 37, 38 verlaufenden Wicklungsabschnitte nehmen in besonderem Maße die von der kontaktlosen Steckverbindung 5 in einer Hauptrichtung erzeugten magnetischen Feldlinien mit guter induktiver Kopplung auf, um eine entsprechende Induktionsspannung an den Spulenanschlüssen 34, 39 zu erzeugen. Dabei ist eine teilweise Überdeckung der Koppeleinrichtung 17 mit ihrem Trägerrohr 31 und der Steckverbindung 5 bezogen auf die Längsrichtung der Anordnung völlig ausreichend.

## Patentansprüche

1. Überwachungsvorrichtung für ein Messsystem von Prozessgrößen insbesondere der Flüssigkeitsanalyse, welches Messsystem einen Sensor (2) zur Erfassung einer Prozessgröße sowie eine kontaktlose, induktive Steckverbindung (5) zwischen Sensor (2) und einem Kabel (6) zur vorzugsweise bidirektionalen Übertragung digitaler Signale zwischen dem Sensor (2) und einem entfernten Messumformer (7) umfasst, wobei die Überwachungsvorrichtung (16) **gekennzeichnet ist durch**
- eine auf die Steckverbindung (5) aufsetzbare, kontaktlos arbeitende Koppeleinrichtung (17) zur Erfassung der über die Steckverbindung (5) übertragenen Signale,
- eine Auswerteeinrichtung (21) zur Auswertung der erfassten Signale, und
- eine Anzeigeeinrichtung (22) zur Darstellung der ausgewerteten Signale.

2. Überwachungsvorrichtung nach Anspruch 1, **dadurch gekennzeichnet, dass** die Koppeleinrichtung (17) eine Empfangsspule zu Erfassung der über die Steckverbindung (5) übertragenen Signale aufweist.

3. Überwachungsvorrichtung nach Anspruch 1 oder 2, **dadurch gekennzeichnet, dass** die Auswerteeinrichtung (21) und Anzeigeeinrichtung (22) in Geräteeinheit mit der Koppeleinrichtung (17) oder in einem Handgerät (20) angeordnet sind, das mit der Koppeleinrichtung (17) über eine Kabelverbindung (19) oder drahtlose Verbindung (19') verbunden ist.

4. Überwachungsvorrichtung nach einem der vorgenannten Ansprüche, **dadurch gekennzeichnet, dass** vom Sensor (2) erfasste Messwerte von Prozessgrößen, Sensordaten, insbesondere Kalibrier- und/oder Belastungsdaten des Sensors (2) von der Überwachungsvorrichtung (16) erfasst, ausgewertet und über die Anzeigeeinrichtung (22) ausgegeben werden.

5. Überwachungsvorrichtung insbesondere nach einem der vorgenannten Ansprüche, **dadurch gekennzeichnet, dass** die Koppeleinrichtung (17) eine Sendespule (25) zur Einkopplung digitaler Signale (28, 29) für die Kommunikation der Überwachungsvorrichtung (16) mit dem Sensor (2) und/oder dem Messumformer (7) in die Steckverbindung (5) aufweist.

6. Überwachungsvorrichtung nach Anspruch 5, **dadurch gekennzeichnet, dass** mittels der Überwachungsvorrichtung (16) von deren Steuereinrichtung (23) generierte Daten für den Sensor (2) und/oder den Messumformer (7) in Form der digitalen Signale über die Koppeleinrichtung (17) in die Kommunikation zwischen Sensor (2) und Messumformer (7) einkoppelbar sind.

7. Überwachungsvorrichtung nach Anspruch 6, **gekennzeichnet durch** folgende von der Steuereinrichtung (23) generierte Datenarten:
- Manipulationsdaten zur Beeinflussung der zwischen Sensor (2) und Messumformer (7) übertragenen Messdaten,
- Befehlsdaten zur Signalisierung von Aufgabenanforderungen an Sensor (2) und/oder Messumformer (7), insbesondere zum Neuauslesen von Sensordaten, wie Kalibrierdaten, und/oder
- Sensordaten, insbesondere Kalibrierdaten oder andere Parameterdaten, die neu in den Sensor (2) einzuschreiben sind.

8. Überwachungsvorrichtung nach einem der vorgenannten Ansprüche, **gekennzeichnet durch** eine Eingabeeinrichtung (24) zur Eingabe von Steuerbefehlen und/oder Daten.

9. Überwachungsvorrichtung nach Anspruch 2 und 5, **dadurch gekennzeichnet, dass** die Empfangs- und Sendespulen durch eine gemeinsame, bifunktionale Spule (30) gebildet sind.

10. Überwachungsvorrichtung nach Anspruch 9, **dadurch gekennzeichnet, dass** die Spule (30) als Rahmenspule auf einem geschlitzten Trägerrohr (31) mit mindestens einer oder mehreren Wicklungen (33.1, 33.2) ausgebildet ist, die parallel der Schlitzkanten (35, 36) und der diese verbindenden Rohr-Stirnkanten (37, 38) verlaufen.

11. Überwachungsvorrichtung nach einem der vorgenannten Ansprüche, **dadurch gekennzeichnet, dass** die jeweils mittels der Koppeleinrichtung (17) erfolgende Erfassung der über die Steckverbindung (5) übertragenen digitalen Signale und Einkopplung von Daten in die Steckverbindung (5) ohne störenden Einfluss auf das Messsystem und die Stabilität der Kommunikationsverbindung zwischen Sensor und Messumformer stattfindet.

12. Überwachungsvorrichtung nach einem der vorgenannten Ansprüche, **dadurch gekennzeichnet, dass** die Koppeleinrichtung (17) eine integrierte Energieversorgung aufweist.

13. Überwachungsvorrichtung nach Anspruch 12, **dadurch gekennzeichnet, dass** die integrierte Energieversorgung durch eine Batterieversorgung (41) und/oder induktive Energieversorgungseinrichtung (40) gebildet ist, die aus der Steckverbindung (5) mit Energie versorgt ist.

14. Überwachungsvorrichtung nach einem der vorgenannten Ansprüche, **dadurch gekennzeichnet, dass** die von der Auswerteeinrichtung (21) ausgewerteten Signale in einer Aufzeichnungseinrichtung (42) aufgezeichnet werden.

15. Messsystem zur Erfassung von Prozessgrößen insbesondere der Flüssigkeitsanalyse, welches Messsystem einen Sensor (2) zur Erfassung einer Prozessgröße sowie eine kontaktlose, induktive Steckverbindung (5) zwischen Sensor (2) und einem Kabel (6) zur vorzugsweise bidirektionalen Übertragung digitaler Signale zwischen dem Sensor (2) und einem entfernten Messumformer (7) umfasst, **gekennzeichnet durch** eine mit der Steckverbindung (5) koppelbare Überwachungsvorrichtung (16) nach mindestens einem der Ansprüche 1 bis 11.

## Claims

1. Monitoring device for a measuring system for measuring process variables, in particular in liquid analysis, which measuring system comprises a sensor (2) for recording a process variable and a contactless, inductive plug-in connection (5) between the sensor (2) and a cable (6) for preferably bidirectional transfer of digital signals between the sensor (2) and a remote transducer (7), wherein the monitoring device (16) **is characterized by**
- a coupling device (17) that can be placed on the plug-in connection (5) and operates without contact to record the signals transferred via the plug-in connection (5),
- an evaluation device (21) for evaluating the recorded signals, and
- a display device (22) for presenting the evaluated signals.

2. Monitoring device according to claim 1, **characterized in that** the coupling device (17) has a receiving coil for recording the signals transferred via the plug-in connection (5).

3. Monitoring device according to claim 1 or 2, **characterized in that** the evaluation device (21) and display device (22) are arranged in a device unit with the coupling device (17) or in a handheld device (20), which is connected to the coupling device (17) via a cable connection (19) or wireless connection (19').

4. Monitoring device according to one of the aforementioned claims, **characterized in that** measured values of process variables, sensor data, in particular calibration and/or load data of the sensor (2), which are recorded by the sensor (2), are recorded by the monitoring device (16), evaluated and output via the display device (22).

5. Monitoring device, in particular according to one of the aforementioned claims, **characterized in that** the coupling device (17) has a transmitting coil (25) for coupling in digital signals (28, 29) for communication of the monitoring device (16) with the sensor (2) and/or the transducer (7) into the plug-in connection (5).

6. Monitoring device according to claim 5, **characterized in that** data for the sensor (2) and/or the transducer (7) generated by means of the monitoring device (16) by its control device (23) in the form of the digital signals can be coupled in to the communication between the sensor (2) and the transducer (7) via the coupling device (17).

7. Monitoring device according to claim 6, **characterized by** the following types of data generated by the control device (23):
- Manipulation data for influencing the measurement data transferred between the sensor (2) and the transducer (7),
- Command data for signaling task requests to the sensor (2) and/or the transducer (7), in particular for re-reading sensor data, such as calibration data, and/or
- Sensor data, in particular calibration data or other parameter data that must be newly written into the sensor (2).

8. Monitoring device according to one of the aforementioned claims, **characterized by** an input device (24) for inputting control commands and/or data.

9. Monitoring device according to claims 2 and 5, **characterized in that** the receiving and transmitting coils are formed by a common, bifunctional coil (30).

10. Monitoring device according to claim 9, **characterized in that** the coil (30) is designed as a frame coil on a slotted carrier tube (31) with at least one or more windings (33.1, 33.2) that run parallel to the slot edges (35, 36) and the tube end edges (37, 38) connecting them.

11. Monitoring device according to one of the aforementioned claims, **characterized in that** the recording of the digital signals transferred via the plug-in connection (5) and the coupling of data into the plug-in connection (5), which is carried out in each case by means of the coupling device (17), takes place without a disrupting influence on the measuring system and the stability of the communication connection between the sensor and the transducer.

12. Monitoring device according to one of the aforementioned claims, **characterized in that** the coupling device (17) has an integrated power supply.

13. Monitoring device according to claim 12, **characterized in that** the integrated power supply is formed by a battery supply (41) and/or inductive power supply device (40), which is supplied with power from the plug-in connection (5).

14. Monitoring device according to one of the aforementioned claims, **characterized in that** the signals evaluated by the evaluation device (21) are recorded in a recording device (42).

15. Measuring system for recording process variables, in particular in liquid analysis, which measuring system comprises a sensor (2) for recording a process variable and a contactless, inductive plug-in connection (5) between the sensor (2) and a cable (6) for preferably bidirectional transfer of digital signals between the sensor (2) and a remote transducer (7), **characterized by** a monitoring device (16) that can be coupled to the plug-in connection (5) in accordance with at least one of the claims 1 to 11.

## Revendications

1. Dispositif de surveillance pour un système de mesure de grandeurs de processus, en particulier d'analyse de liquides, lequel système de mesure comprend un capteur (2) pour détecter une grandeur de processus ainsi qu'un connecteur enfichable inductif sans contact (5) entre le capteur (2) et un câble (6) pour la transmission de préférence bidirectionnelle de signaux numériques entre le capteur (2) et un convertisseur de mesure (7) éloigné, le dispositif de surveillance (16) étant **caractérisé par**
- un dispositif de couplage (17) pouvant être placé sur le connecteur enfichable (5) et fonctionnant sans contact pour détecter les signaux transmis par le biais du connecteur enfichable (5),
- un dispositif d'évaluation (21) pour évaluer les signaux détectés, et
- un dispositif d'affichage (22) pour la représentation des signaux évalués.

2. Dispositif de surveillance selon la revendication 1, **caractérisé en ce que** le dispositif de couplage (17) présente une bobine de réception pour détecter des signaux transmis via le connecteur enfichable (5).

3. Dispositif de surveillance selon la revendication 1 ou 2, **caractérisé en ce que** le dispositif d'évaluation (21) et le dispositif d'affichage (22) sont disposés dans une unité d'appareil avec le dispositif de couplage (17) ou dans un appareil portatif (20) qui est relié au dispositif de couplage (17) par une liaison par câble (19) ou une liaison sans fil (19').

4. Dispositif de surveillance selon l'une quelconque des revendications précédentes, **caractérisé en ce que** des valeurs de mesure de grandeurs de processus, des données de capteur, en particulier des données de calibrage et/ou de charge du capteur (2), saisies par le capteur (2), sont détectées par le dispositif de surveillance (16), évaluées et sorties par l'intermédiaire du dispositif d'affichage (22).

5. Dispositif de surveillance, en particulier selon l'une quelconque des revendications précédentes, **caractérisé en ce que** le dispositif de couplage (17) présente une bobine d'émission (25) pour l'injection de signaux numériques (28, 29) pour la communication du dispositif de surveillance (16) avec le capteur (2) et/ou le convertisseur de mesure (7) dans le connecteur enfichable (5).

6. Dispositif de surveillance selon la revendication 5, **caractérisé en ce que** des données générées au moyen du dispositif de surveillance (16) par son dispositif de commande (23) pour le capteur (2) et/ou le transducteur de mesure (7) peuvent être injectées sous la forme des signaux numériques par l'intermédiaire du dispositif de couplage (17) dans la communication entre le capteur (2) et le transducteur de mesure (7).

7. Dispositif de surveillance selon la revendication 6, **caractérisé par** les types de données suivants générés par le dispositif de commande (23) :
- des données de manipulation pour influencer les données de mesure transmises entre le capteur (2) et le convertisseur de mesure (7),
- des données de commande pour signaler des demandes de tâches au capteur (2) et/ou au convertisseur de mesure (7), en particulier pour la nouvelle lecture de données de capteur, telles que des données de calibrage, et/ou
- des données de capteur, notamment des données de calibrage ou d'autres données paramétriques qui doivent être nouvellement inscrites dans le capteur (2).

8. Dispositif de surveillance selon l'une quelconque des revendications précédentes, **caractérisé par** un dispositif d'entrée (24) pour l'entrée d'instructions de commande et/ou de données.

9. Dispositif de surveillance selon les revendications 2 et 5, **caractérisé en ce que** les bobines de réception et d'émission sont formées par une bobine commune bifonctionnelle (30).

10. Dispositif de surveillance selon la revendication 9, **caractérisé en ce que** la bobine (30) est réalisée sous forme de bobine cadre sur un tube support fendu (31) avec au moins un ou plusieurs enroulements (33.1, 33.2) qui s'étendent parallèlement aux bords de la fente (35, 36) et aux bords frontaux du tube (37, 38) qui les relient.

11. Dispositif de surveillance selon l'une quelconque des revendications précédentes, **caractérisé en ce que** la détection des signaux numériques transmis par le connecteur enfichable (5) et l'injection de données dans 1 le connecteur enfichable (5), qui s'effectuent respectivement au moyen du dispositif de couplage (17), ont lieu sans influence perturbatrice sur le système de mesure et la stabilité de la liaison de communication entre le capteur et le convertisseur de mesure.

12. Dispositif de surveillance selon l'une quelconque des revendications précédentes, **caractérisé en ce que** le dispositif de couplage (17) présente une alimentation en énergie intégrée.

13. Dispositif de surveillance selon la revendication 12, **caractérisé en ce que** l'alimentation en énergie intégrée est formée par une alimentation par batterie (41) et/ou par un dispositif d'alimentation en énergie inductif (40), qui est alimenté en énergie à partir du connecteur enfichable (5).

14. Dispositif de surveillance selon l'une quelconque des revendications précédentes, **caractérisé en ce que** les signaux évalués par le dispositif d'évaluation (21) sont enregistrés dans un dispositif d'enregistrement (42).

15. Système de mesure pour la détection de grandeurs de processus, en particulier d'analyse de liquides, lequel système de mesure comprend un capteur (2) pour la détection d'une grandeur de processus ainsi qu'un connecteur enfichable (5) inductif sans contact entre le capteur (2) et un câble (6) pour la transmission de préférence bidirectionnelle de signaux numériques entre le capteur (2) et un convertisseur de mesure (7) éloigné, **caractérisé par** un dispositif de surveillance (16) pouvant être couplé au connecteur enfichable (5) selon au moins l'une quelconque des revendications 1 à 11.
